# EUROPEAN PATENT APPLICATION

(11) **EP 1 705 511 A1**
(43) Date of publication of application: **27.09.2006**
(21) Application number: 06110819.7
(22) Date of filing: 08.03.2006
(51) Int. Cl.: G02B 26/08, G02B 27/00

(54) **Illuminator for a projector having a coloured wheel and collimating means**

(30) Priority: 22.03.2005 FR 0550745
(71) Applicant: Thomson Licensing S.A., 92100 Boulogne-Billancourt (FR)
(72) Inventor: Drazic, Valter, 92648, BOULOGNE CEDEX (FR); Sarayeddine, Khaled, 92648, BOULOGNE CEDEX (FR)

(57) **Abstract**

The invention relates to an imaging system for projector (2) comprising:
-an illumination source (200) producing an illumination beam (201) composed of several colours, termed a white beam,
-at least one coloured wheel (202) for transforming the white beam focussing on the coloured wheel or wheels into a coloured sequential beam,
-an integrator guide (204),
-an imager (206),

According to the invention, the system comprises at least one collimating lens (2030, 2031) between the coloured wheel or wheels and the integrator guide.

The invention relates also to a projector implementing such a system.

## Description

### 1. Field of the invention.

The invention pertains to the field of image projection.

More precisely, the invention relates to an imaging system or to an illumination system for imager in a video projector of front type or in a rear projector.

### 2. Technical Background.

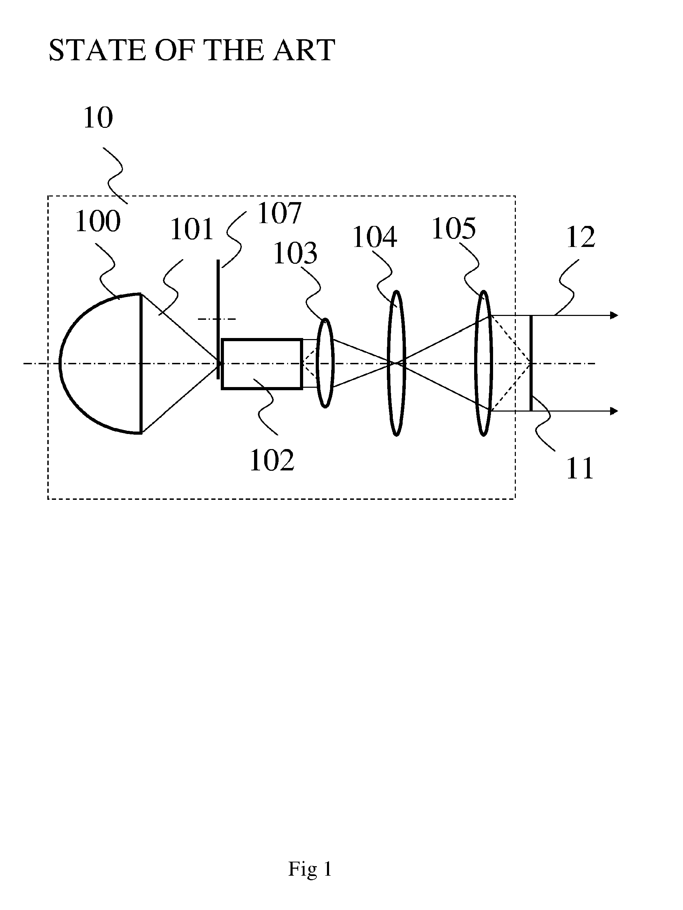

According to the technical background, as illustrated with regard to **Figure 1,** use is made of an illumination system 10 illuminating an imager 11 of transmissive LCD type of length equal to 16 mm and of width equal to 10 mm.

Conventionally, the illumination system 10 comprises:
- an illumination source 100 with elliptical reflector
- a coloured wheel 107;
- a rectangular guide 102 whose length is around 4 cm and whose cross section is less than 0.5 times that of the imager 11; and
- a system of several relay lenses 103 to 105.

The illumination source 100 illuminates with a light beam 101 the coloured wheel 107 placed at the entrance of the rectangular guide 102, at the focus of the elliptical reflector of the source 100. The rectangular guide 102 is used to convert the circular cross section of the illumination beam into a rectangular cross section and to make the beam spatially uniform. Such a system is, for example, described in patent document JP2000-193911 from the company CANON KK published on 14 July 2000.

The output of the guide 102 is imaged on the imager 11 via the system of relay lenses, a minimum of two in number, but often three or four in number, the illumination being moreover preferably telecentric. The imager illuminated by the illumination beam emits an imaging beam 12 which is used to project an image onto a screen via a suitable objective.

If the imager 11 is of DMD type ("digital micromirrors device" from the company Texas Instruments®) a TIR prism is placed between the illumination system 10 and the imager 11 so as to split the beams. The TIR prism is unnecessary if the imager 11 is of the transmissive LCD type ("liquid crystal display") or replaced by a PBS (or "polarising beam splitter") if the imager 11 is of the LCOS type ("liquid crystal on silicon").

The main drawbacks of the state of the art, are the number of optical components (typically one guide and at least two relay lenses) and/or their size (lenses or prisms).

### 3. Summary of the invention.

The invention is aimed at alleviating these drawbacks of the prior art.

More particularly, the objective of the invention is to simplify the implementation of an illumination system in an image projector.

For this purpose, the invention proposes an imaging system for projector comprising:
- an illumination source producing an illumination beam composed of several colours, termed a white beam,
- at least one coloured wheel for transforming the white beam focussing on the coloured wheel or wheels into a coloured sequential beam,
- an integrator guide,
- an imager,

The system is noteworthy in that it comprises at least one collimating lens between the coloured wheel or wheels and the integrator guide.

Advantageously, the imager is placed behind the guide without relay lens between the guide and the imager.

According to a particular characteristic, the imager is reflective and the system comprises a prism between the exit of the guide and the imager.

According to an advantageous characteristic, the prism is placed immediately after the exit of the guide,

According to a particular characteristic, the imager is a DMD imager and the prism is a non polarization splitting total internal reflection prism.

According to another characteristic, the imager is a LCOS imager and the prism is a polarization splitting prism.

According to yet another characteristic, the imager is transmissive and placed immediately after the guide.

According to an advantageous characteristic, the collimating lens or lenses comprise at least one convex face.

Advantageously, the system comprises a single lens between the coloured wheel or wheels and the guide.

Preferably, the guide has a length greater than a determined value so that the illumination at the exit of the guide is substantially uniform.

Advantageously, the optical length of the guide is greater than or equal to 6 cm, and still more advantageously to 8 cm.

According to an advantageous characteristic, the guide has a cross section greater than or equal to 0.6 times the cross section of the imager and less than or equal to 0.9 times the cross section of the imager.

The invention also relates to a projector comprising a system as specified above according to the invention and a projection objective.

### 4. List of figures.

The invention will be better understood, and other features and advantages will be become apparent on reading the description which follows, the description making reference to the appended drawings in which:
- Figure 1 illustrates an illumination system known per se;
- Figure 2 is a very schematic diagram of a projector according to the invention;
- Figure 3 describes an illumination system implemented in the projector of Figure 2;
- Figure 4 illustrates a prism of the illumination system of Figure 3;
- Figure 5 shows the intensity of the illumination beam in the plane of the imager of the projector of Figure 2;
- Figure 6 depicts an illumination system implementing an LCOS according to a variant of the invention; and
- Figure 7 depicts an illumination system implementing a reflective LCD according to another variant of the invention.

### 5. Detailed description of the invention.

The invention therefore makes it possible to dispense with the relay lenses at the exit of the guide, to decrease the size of the optical element (prisms in particular) close to the imager and hence to reduce the cost of the illuminating systems for projectors. A PBS prism (or "polarizing beam splitter"), for example, placed in front of an LCOS imager may be smaller than according to the state of the art since, the relay lens according to the state of the art must be telecentric and hence of large size for a reflective imager. The simplicity of mechanical implementation and assembly also makes it possible to reduce the manufacturing costs.

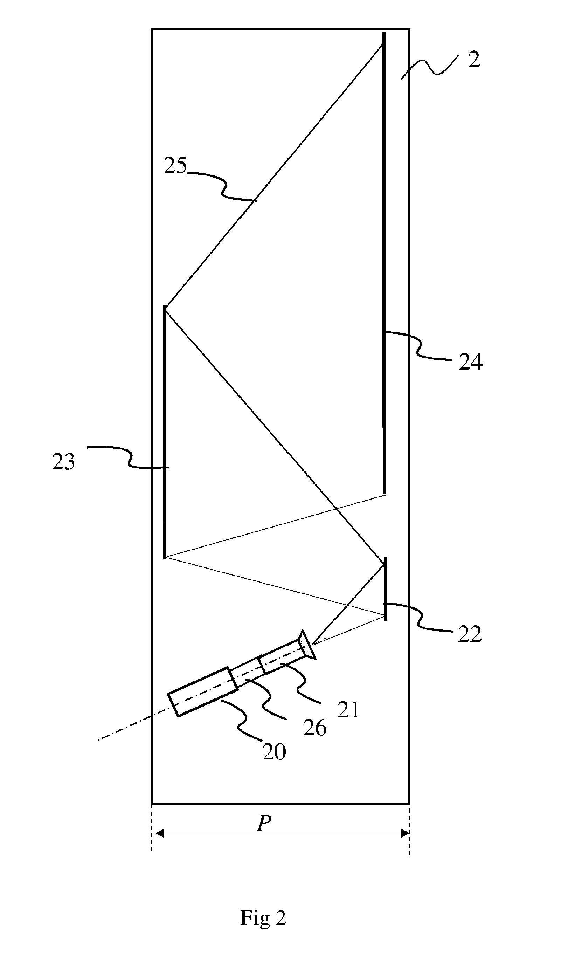

**Figure 2** is a very schematic diagram of a rear projector 2 according to a first embodiment of the invention.

The projector 2 comprises:
- an illumination system 20 illuminating an imager 208 (the whole forming an imaging system);
- an objective 21 receiving an illumination beam 26 created by the illumination system 20 and producing a beam 25;
- a rear projection screen 24 illuminated by the beam 25; and
- two fold-back mirrors 22 and 23 folding back the beam 25 and making it possible to reduce the depth P of the projector 2.

The objective 21, the mirrors 22 and 23 and the screen 24, as well as their layout are well known to the person skilled in the art and will not be detailed further.

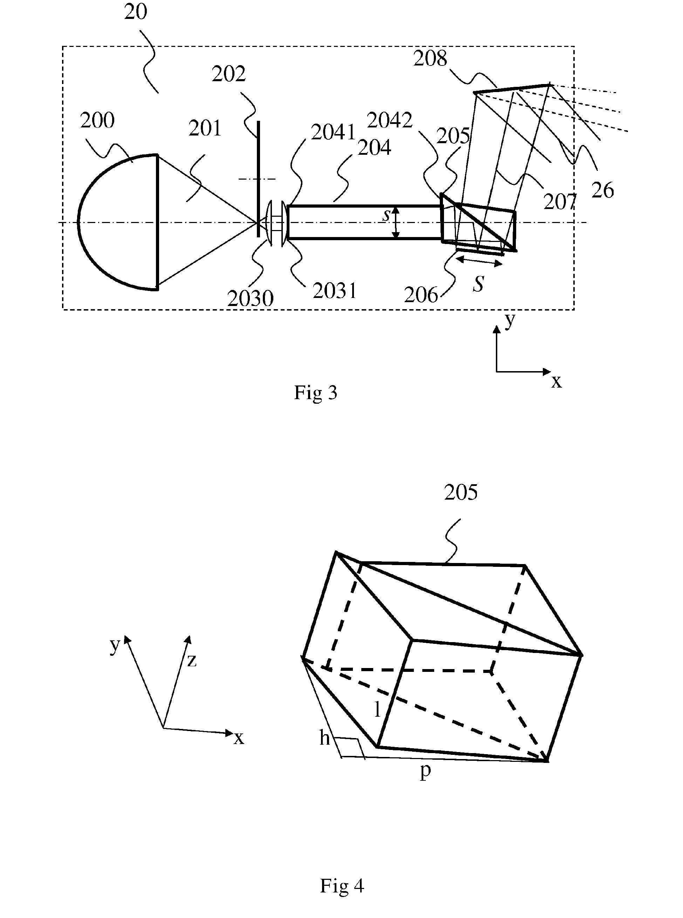

**Figure 3** depicts in greater detail, in a plane *xy*, the illumination system 20 illuminating the imager 208 and which comprises:
- an illumination source 200 with elliptical reflector exhibiting a degree of focusing (for an f/1 aperture) of around 30°;
- a coloured wheel 202;
- a group of collimating lenses 2030 and 2031;
- a hollow rectangular guide 204 with reflective external faces (apart from the entrance 2041 and the exit 2042); and
- a TIR prism 205.

The imager 208 is of reflective DMD type ("digital micromirrors device" from the company Texas Instruments®) and has, for example, a length of 16 mm and a width of 10 mm. It produces an imaging beam 26 when it is illuminated by an illumination beam 207 (the unused part of the beam corresponding to the black pixels is represented dotted).

The illumination source 200 illuminates with a light beam 201 the coloured wheel 202 placed at the focus of the elliptical reflector of the source 200.

The light beam 201 is also focused on the coloured wheel 202.

The lenses 2030 and 2031 are preferably of small size, thereby making it possible to reduce the cost. Their cross section is preferably slightly greater than the cross section of the guide 204 so as to ensure mechanical retention (for example their diameter is greater than the diagonal of the guide plus 2 mm).

The rectangular guide 204 is used to convert the circular cross section of the illumination beam into a rectangular cross section and to make the beams spatially uniform. Its length is equal to around 8 cm. It is thus tailored to the size of the imager 208 and to the degree of focusing of the source 200 so as to illuminate the imager 208 in a substantially uniform manner. In a general manner, the rectangular guide has a length at least twice as long as according to the state of the art so as to obtain good uniformity of the beam 207 illuminating the imager. Specifically, the angles of the rays of the illumination beam 201 are generally smaller than according to the prior art. Advantageously, the length and the cross section of the guide 204 are tailored to the size of the imager 208 and to the degree of focusing of the source 200. Preferably, the length of the guide 204 is greater than or equal to 6 cm and still more preferably to 8 cm.

According to a variant of the invention, the guide 204 is solid, the guide consisting of a transparent material with reflecting external faces. Its length depends on the index n of its material. Typically, this length corresponds to the product of the index times the length of the hollow guide. Thus, with an index n equal to 1.5, its length is preferably equal to 9 cm (i.e. 6 x 1.5 cm) and still more preferably to 12 cm (i.e. 8 cm x 1.5).

According to the mode illustrated in Figure 3 or according to variants, preferably, the cross section s of the guide 204 is between 0.6 and 0.9 times the cross section S of the imager 208 (0.6*S* ≤ *s* ≤ 0.9*S*). Still more preferably, the cross section s of the guide 204 is between 0.7 and 0.9 times the cross section S of the imager 208 (0.7*S* ≤ *s* ≤ 0.9*S*).

The lenses 2030 and 2031 are preferably planar-convex or biconvex and make it possible to obtain quasi-telecentric rays in the guide 204 preferably with a maximum beam aperture of less than or equal to 12°. Still more preferably, the maximum aperture of the beam is less than or equal to that of the objective. The lenses 2030 and 2031 make it unnecessary to have a relay lens at the exit of the guide 204 (as used according to the state of the art). Their function is essentially to substantially collimate the beam entering the guide 204 through the entrance 2041. Also, the TIR prism 205 is preferably placed immediately after the exit 2042 of the guide 204 and is preferably abutted to the exit 2042 so as to preclude the spreading of the illumination beam between the guide 204 and the prism 205 and hence a loss of effectiveness. This also makes it possible to reduce the proportions of the illuminating system and to facilitate the manufacture thereof.

The TIR prism 205 makes it possible in particular to preclude the return of the imaging beam produced by the reflective DMD into the guide 204.

No relay lens is therefore present between the guide 204 and the prism 205 thereby making it possible to reduce the costs and the size of the TIR prism at the exit of the guide. Furthermore, the architecture of the system according to the invention also makes it possible to reduce the size of the TIR prism used with respect to the state of the art.

According to a variant embodiment of the invention, the two lenses 2030 and 2031 are replaced by a single collimating lens which is biconvex or planar convex and which affords the same collimating function.

According to yet another variant embodiment, the two collimating lenses 2030 and 2031 are replaced by at least three collimating lenses (for example three, four, etc.).

**Figure 4** depicts a perspective of the prism 205 in a space xyz.

The prism 205 has in particular a height h (along the y axis) and a width / (along the z axis) that are larger respectively than the height and the width of the exit 2042 of the guide 204 so that any light flux exiting the guide 204 enters the prism 205, and that the reflection on the splitting surface, then on the mirror 206 takes place substantially with no loss of flux.

Additionally, the prism 205 has a depth p (along the x axis).

By way of illustration, according to a particular embodiment, we consider an imager 206 of cross section S equal to 17.51 mm x 9.85 mm and a guide 204 of cross section s equal to 11.38 mm x 6.40 mm (the ratio s/S then equals 0.65). We also consider a TIR prism of height h equal to 45.50 mm, a depth p equal to 29.50 mm and a width / equal to 28.40 mm. These dimensions are around 20% smaller than that of a TIR used in any lumination system according to the state of the art.

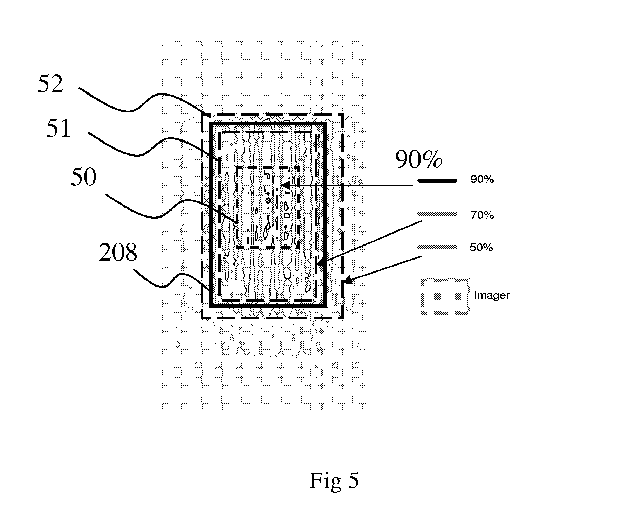

**Figure 5** shows the intensity of the beam 207 in the plane of the imager 208.

Thus, it is noted that the flux illuminating the imager is very uniform, the zones 51 and 52 corresponding respectively to 70% and to 50% of the illumination being substantially rectangular and practically coinciding with the surface of the imager 208. A zone 50 corresponding to 90% is also substantially rectangular and centred on the imager 208.

The invention applies also to imagers which are not necessarily imagers of transmissive LCD type ("liquid crystal display") but is compatible with any type of imager, in particular of DMD ("digital micromirrors devices" from the company Texas Instruments®) or LCOS ("liquid crystal on silicon") type.

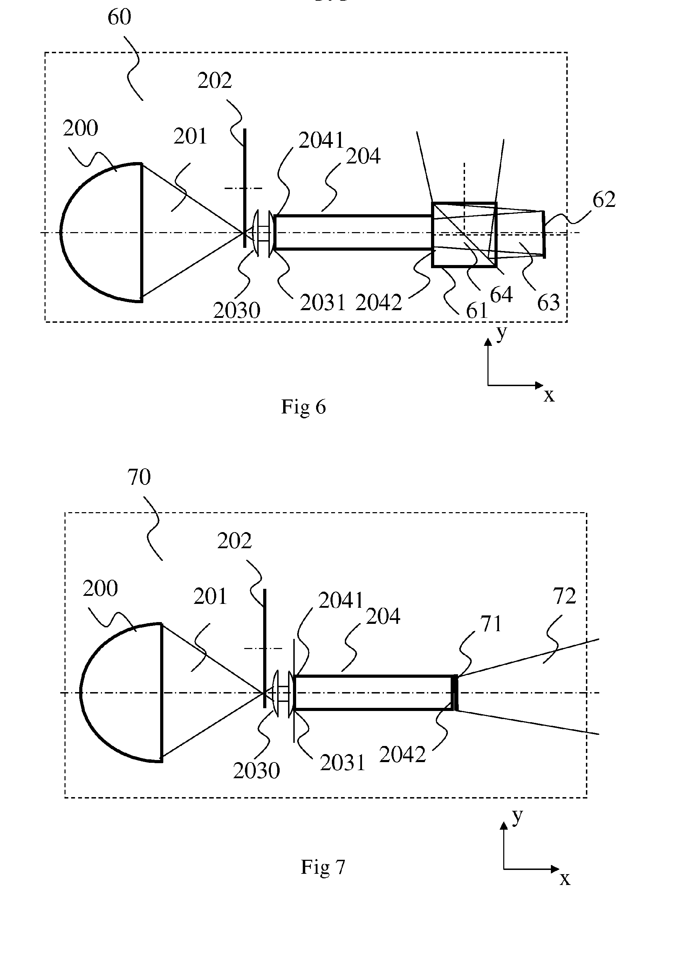

**Figure 6** depicts an illumination system 60 implementing an imager 62 of LCOS ("liquid crystal on silicon") type. In the case of an LCOS, the TIR prism is replaced by a PBS 61 (or "polarizing beam splitter").

More precisely, the system 60 comprises:
- an illumination source 200;
- a coloured wheel 202;
- a group of collimating lenses 2030 and 2031;
- a rectangular guide 204; and
- a PBS prism (polarization splitter) 61.

The elements common to the systems 20 and 60 bear the same names and references and will not be described further.

The LCOS imager 62 has, for example, a length of 16 mm and a width of 10 mm. It produces an imaging beam 63 when it is illuminated by an illumination beam 64. The imaging beam 63 returned by the imager 62 is returned by the splitting surface of the PBS 61 towards the objective 21.

The cross section s of the guide 204 is between 0.6 and 0.9 times the cross section S of the imager 62 (0.6*S* ≤ *s* ≤ 0.9S). Still more preferably, the cross section s of the guide 204 is between 0.7 and 0.9 times the cross section *S* of the imager 62 (0.7*S* ≤ *s* ≤ 0.9*S*).

The PBS prism 61 is placed immediately after the exit 2042 of the guide 204 and is preferably abutted to the exit 2042 of the guide 204 to preclude the spreading of the illumination beam between the guide 204 and the prism 61 and hence a loss of effectiveness.

No relay lens is therefore present between the guide 204 and the prism 61 thereby making it possible to reduce the costs and the size of the PBS prism at the exit of the guide. Furthermore, the architecture of the system according to the invention also makes it possible to reduce the size of the PBS prism used with respect to the state of the art.

**Figure 7** depicts an illumination system 70 implementing an imager 71 of transmissive LCD type. This embodiment does not comprise any prism at the exit of the guide.

More precisely, the system 70 comprises:
- an illumination source 200;
- a coloured wheel 202;
- a group of collimating lenses 2030 and 2031; and
- a rectangular guide 204.

The elements common to the systems 20 and 70 bear the same names and references and will not be described further.

The transmissive LCD imager 71 has, for example, a length of 16 mm and a width of 10 mm. It produces an imaging beam 72 when it is illuminated by an illumination beam.

The transmissive LCD imager 71 is placed immediately after the exit 2042 of the guide 204 and is preferably abutted to the exit 2042 of the guide 204 to preclude the spreading of the illumination beam between the guide 204 and the imager 71 and hence a loss of effectiveness.

No relay lens is therefore present between the guide 204 and the imager 71, thereby making it possible to reduce the costs of the system.

Of course, the invention is not limited to the embodiments described above.

The invention is compatible with imagers of variable type, size and shape. Thus, the invention applies to the illumination systems associated with any type of imager and with means of adaptation necessary for the proper operation of the imager (for example prism of TIR or PBS type or any other suitable prism).

The invention applies also to coloured filters of type other than a coloured wheel comprising transmissive coloured segments. It applies in particular to the case where the coloured wheel is used according to a reflective mode or more generally to any coloured filter suitable for image projection (in particular, to the case where the coloured wheel is replaced by two (or more) coloured wheels.

According to a variant embodiment, the invention applies also to the case where additional optical elements are placed between the exit of the guide and the imager or a prism, or between a prism and the imager.

The invention applies likewise to any type of source (for example, lamp with reflector, LED (power light-emitting diodes) producing a beam comprising several colours (for example white beam comprising the whole spectrum or simply a part of the visible spectrum), focusing onto one or more coloured wheels. Thus, the beam comprising several colours is transformed into a coloured sequential beam when the coloured wheel or wheels rotate.

Furthermore, the invention applies to any type of projector implementing an illumination system as described above and, in particular, to front projectors or to rear projectors implementing imagers (in particular transmissive LCD, DMD or LCOS type microdisplays).

## Claims

1. Imaging system (20, 60, 70) for projector (2) comprising:
- an illumination source (200) producing an illumination beam (201) composed of several colours, termed a white beam,
- at least one coloured wheel (202) for transforming the said white beam focussing on the coloured wheel or wheels into a coloured sequential beam,
- an integrator guide (204),
- an imager (206, 62, 71),
**characterized in that** the said system comprises at least one collimating lens (2030, 2031) between the coloured wheel or wheels and the said integrator guide.

2. System according to Claim 1, **characterized in that** the imager is placed behind the guide without relay lens between the guide and the imager.

3. System according to any one of Claims 1 and 2, **characterized in that** the said imager (206, 62) is reflective and that the said system comprises a prism (205, 61) between the exit of the said guide and the said imager.

4. System according to Claim 3, **characterized in that** the said prism is placed immediately after the exit of the said guide.

5. System according to any one of Claims 3 and 4, **characterized in that** the said imager (206) is a DMD imager and that the said prism (205) is a non polarization splitting total internal reflection prism.

6. System according to any one of Claims 3 and 4, **characterized in that** the said imager (62) is a LCOS imager and that the said prism (61) is a polarization splitting prism.

7. System according to any one of Claims 1 and 2, **characterized in that** the said imager (71) is transmissive and placed immediately after the said guide.

8. System according to any one of Claims 1 to 7, **characterized in that** the said collimating lens or lenses (2030, 2031) comprise at least one convex face.

9. System according to any one of Claims 1 to 8, **characterized in that** it comprises a single lens between the said coloured wheel or wheels and the said guide.

10. System according to any one of Claims 1 to 9, **characterized in that** the said guide has a length greater than a determined value so that the illumination at the exit of the guide is substantially uniform.

11. System according to any one of Claims 1 to 10, **characterized in that** the optical length of the said guide is greater than or equal to 6 cm.

12. System according to Claim 11, **characterized in that** the optical length of the said guide is greater than or equal to 8 cm.

13. System according to any one of Claims 1 to 12, **characterized in that** the said guide has a cross section greater than or equal to 0.6 times the cross section of the said imager and less than or equal to 0.9 times the cross section of the said imager.

14. Projector (2) comprising a system (20, 60, 70) according to any one of Claims 1 to 13 and a projection objective (21).
